# EUROPEAN PATENT SPECIFICATION

(11) **EP 1 488 592 B1**
(45) Date of publication and mention of the grant of the patent: **11.07.2012**
(21) Application number: 03745062.4
(22) Date of filing: 24.03.2003
(51) Int. Cl.: H04L 12/56

(54) **APPARATUS AND METHOD FOR ADAPTIVE DATA TRANSMISSION**
VORRICHTUNG UND VERFAHREN ZUR ADAPTIVEN DATENÜBERTRAGUNG
SYSTEME ET PROCEDE DE TRANSMISSION ADAPTATIVE DE DONNEES

(30) Priority: 26.03.2002 SE 0200926
(43) Date of publication of application: 22.12.2004
(73) Proprietor: Google Inc., Mountain View, CA 94043 (US)
(72) Inventor: PARNES, Peter, S-997 54 Lulea (SE)
(74) Representative: Herbjørnsen, Rut
(86) International application number: PCT/SE2003/000485
(87) International publication number: WO 2003/081872

(56) References cited:
- WO-A1-01/77850
- US-A1- 2002 031 144
- PARNES P. ET AL.: 'Real-time control and management of distributed applications using IP-multicast' IEEE 1999, pages 901 - 914, XP010336930
- PARNES P. ET AL.: 'mSTAR: enabling collaborative applications on the internet' IEEE September 2000 - October 2000, pages 32 - 39, XP002974360

## Description

### Technical field of the invention

The present invention generally relates to an apparatus and method for adapting bandwidth transmission relating to one sender based on the amount of bandwidth used by other senders within a group of senders.

### Background of the invention

During the last 20 years, and in particular during the last decade, the information obtainable from the Internet has increased immensely. Users of computers and computer controlled equipment have become used to the ability of retrieving all kinds of information at high transmission rates and especially for the younger generation, the Internet now represents the first choice when searching for information. The impact that the Internet will have on everyone's daily life cannot be overestimated, at least in a little longer perspective than a few years.

One of the ever increasing requirements from all users is bandwidth, i.e. provision of a sufficient transmission rate of digital information, the information either being sent or retrieved. Even though the transmission rates to and from ordinary personal computers have increased from a few kbits/second to sometimes far above 2 Mbits/second in just a few years, the limited transmission rates still causes congestion while transmitting in computer networks no matter what their nature is. Congestion is particularly undesirable when broadcasting video and audio streams to media consuming users over the Internet, since the transmission quality must not be above a certain limit in order to allow the desired message to be conveyed to the user. Media services being paid for by users of the service, such as the so called "video on demand" and various tools that enable real time electronic meetings, must come up to the offered standard in order to meet the user expectations and to justify the charged costs by service providers for the service in question.

The international patent application WO 01/77850 discloses a multicast congestion control program that comprises a round trip time estimator estimating the round trip time of the multicast. When the round trip time of the multicast is above a predetermined value, the transmission rate is decreased by half since loss of information is detected.

Known real-time group handling applications in the field use a centralised entity for calculating the transmission rate as data is sent through the entity. A solution without the centralised entity having to calculate transmission rates would be advantageous for simplicity reasons.

Other prior art solutions to the problem of congestion either utilises a fixed sending rate or an adaptation of accessible bandwidth, the adaptation based on feedback from receivers to the sending clients. The later is usually the case in point-to-point communication on the Internet but algorithms applicable are not designed for group communication and are not suitable for use here. Group communication with several active senders at the same time is not yet widely spread and thus applicable solutions to the problem of congestion and limited or varying bandwidth in the field of group communication are still lacking.

Even though the transmission rate is continuously increasing, bandwidth will always be more or less limited as Internet applications as a result of the enhanced abilities of services developed require more bandwidth. In particular Internet based multimedia services require very high transmission rates. From a users point of view it is desirable to keep the total bandwidth used within the communicating group in a certain media event below a certain limit, the limit depending on the transmission capacity of the network used.

US2002031144 A1 discloses a system that reserves bandwidth between nodes of a network.

WO 0177850 A1 discloses a system wherein a transmitter is adjusting is transmission rate based on congestion parameters.

The article "Real time Control and Management of distributed applications using IP- multicast" P. PArnes et al. 1999, IEEE, discloses a system wherein a central controller is adjusting the transmission of the different participating users.

Article "mStar: Enabling Collaborative Applications on the Internet" P. Parnes et al IEEE, Sept.-Oct. 2000, discloses a system wherein a centralised bandwidth manager distributes a changing allowed bandwidth to user clients based on the transmission of participating users.

### Summary of the invention

It is therefore an object of the present invention to alleviate the previously mentioned shortcomings of prior art associated with group communication services. This is accomplished by an apparatus and method for monitoring and adjusting bandwidth utilisation between a group of different participating users accessing client terminals in a common media event in a computer network, the apparatus comprising:
a distributing unit adapted to distribute address information and bandwidth limitation to the participating users connectable via the computer network to the common media event from their respective client terminals, the distributing unit being hosted from a central administration entity,
connecting links adapted to connect each client terminals of participating users via the Internet or any other global interconnecting network to the distributing unit,
wherein the bandwidth limitation is a limitation in total bandwidth for an interactive media event within a group of participants, and the apparatus further comprises:
   measurement means arranged at the client terminals and adapted to measure incoming data streams to the client terminals from other users, wherein the client terminals are adapted to autonomously adjust their amount of transmission to a level that allows for optimal utilisation of available resources during transmission based on the comparison of the distributed bandwidth limitation and the measured incoming data streams.

By monitoring the amount of bandwidth used for transmission by other senders, for instance transmission of streamed video, every sender, i.e. participating user in front of a client terminal, is instructed by a regulating means to adapt its own transmission rate. This is in order to keep the total amount of bandwidth used under a fixed and predetermined limit. A single user can request more transmission capacity, like for instance video bandwidth, by just sending more and others will lower their transmission rate automatically due to immediate instructions from the regulating means. Every sender will by this also automatically adapt when senders join or leave the group.

The present invention can be used for transmission of general data within a wide range of applications, such as for example a common digital note pad with similar functionality to an ordinary whiteboard, web information and video transmission. The applicability of the present invention ranges as widely as including all kinds of digital information content and conceivable fields for use are all Internet-based services provided, in particular fields involving high transmission rates and large amounts of data to be transmitted.

Preferably, the bandwidth limitation and address information is transmitted electronically in response to a participating user being accepted to enter into a certain media event, but the information can be forwarded to the user in any way. E-mail or accessibility via a secure web-address where the participating user is able to log in are two examples of ways to distribute data necessary for participation.

As long as a transmission capacity allows for a certain rate of transmission without congestion or delays, the sense of security is improved when knowing that this certain rate is sufficient for a particular media service to function properly.

### Brief description of the drawings

The features, objects, and further advantages of this invention will become apparent by reading this description in conjunction with the accompanying drawings, in which like reference numerals refer to like elements and in which:

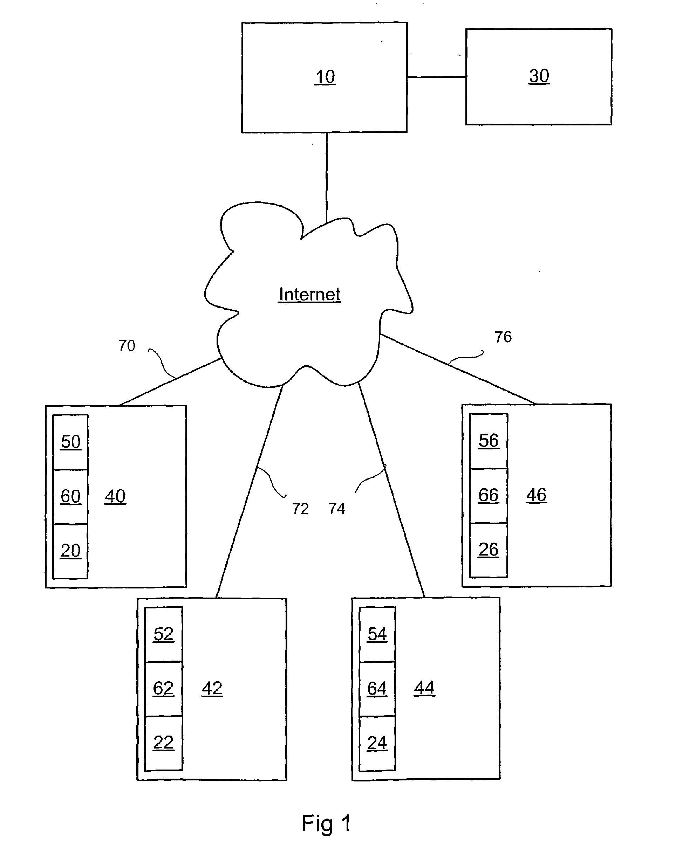

Fig 1 illustrates an apparatus for monitoring and adapting bandwidth utilisation between different participating users in accordance with the present invention.

### Detailed description

The following description is of the best mode presently contemplated for practising the invention. The description is not to be taken in a limiting sense, but is made merely for the purpose of describing the general principles of the invention. The scope of the invention should be ascertained with reference to the issued claims.

With reference to Fig 1, the outline of a computer network 5 is illustrated. A plurality of client terminals 40, 42, 44, 46 are connected to the Internet or any other global interconnecting network via connecting links, 70, 72, 74, 76 respectively. Conceivable for use are various wired connections, but likely for use already today or in a near future are also wireless transmission technologies, such as access technology based on infrared, Bluetooth or wireless-LAN. Connection means used in association with the present invention will of course develop with new and emerging access technologies. To each client terminal is coupled an image capturing means 50, 52, 54, 56, preferably a so-called web-camera, a digital camera or a digital video camera. For audio equipped applications must be provided also audio transceiver abilities and signal processing means 60, 62, 64, 66, such as a microphone and loudspeaker arrangement and analogue-digital converters. According to a preferred embodiment a headset is used, but this may not be necessary since most client terminals will be multimedia enabled personal computers having operating audio equipment installed.

Moreover, the Internet or any other network suitable for data transmission is utilised for transporting data between the previously mentioned client terminals and a distributing unit 10. This unit is preferably a portal handling accessibility of users willing to participate in a certain media event. Necessary identification, authentication and authorisation of users is carried out at the distributing unit, but a detailed description of those steps clearly goes beyond the scope of this application and is therefore omitted here.

The distributing unit comprises measurement means 20-26, which are developed to monitor and control the bandwidth utilisation of each of client terminals of the participating users in a media event. The measurement means are preferably provided in software packages necessary for a user who wants to participate in any media event managed, the software is obtainable from the distributing unit. Both the distributing unit and the measurement means are accessible from a central administration entity 30, such as a company running the portal from where the media events are accessible, or by which a so-called electronic meeting with a plurality of participants made possible. Information relating to the bandwidth limitation is suitably to be distributed to users from the distributing unit.

Referring to the apparatus outlined in Fig 1, an exemplary embodiment of the operation of the present invention will follow. The total bandwidth in a computer network allowing for a certain transmission capacity is set to 500 kbits/s within a group. In other words, the predetermined limitation in total bandwidth use during an interactive media event within a group of participants is 500 kbits/s. The group is about to take active part in an interactive media event, such as for example an electronic meeting. The meeting is established by accessing the group managed by the distributing unit. Accepted participants in the media event, the participants called A and B, both start transmitting data over the computer network at a rate of 400 kbits/s each. By means of the distributing unit and the measurement means with which they communicate, they will be made aware of other participants' transmission and as a result of this information awareness, they will both lower their transmission rates, initially to 100 kbits/s each (500 total minus 400 seen from the third party). The two participants now send at each 100 kbits/s and will be made aware and notice that there is more bandwidth available. Both of them will therefore be instructed to increase their send rate until both are sending at 250 kbits/s each. A third sender C now joins the group and starts sending at a rate 100 kbits/s. Senders A and B will adapt to each sending 200 each. Sender A stops transmission and now sender B will increase its send-rate to 400. Sender C will not do anything as its requested send-rate is already reached (i.e. 100 kbits/s). This process goes on continuously and all senders continuously adapt the transmission rate.

The adaptation to a certain available transmission rate is very quick. In case smoother adaptation is requested the increase or decrease in transmission rate can be lead through a low-pass filter. This smoothens and slows down the adaptation to a lower level which is beneficial in certain situations. During the adaptation process the total transmission rate will sometimes exceed the allowed maximum which in certain cases may cause a problem. This problem is alleviated by means of providing the apparatus with the described low-pass filter.

The present invention makes it possible to adapt the transmission rate in real-time, which is a necessity for being able to add or subtracting participating users during an ongoing media event. The invention is a means for keeping the total bandwidth used within a group of senders at approximately a constant maximum where every sender adapts its transmission rate accordingly.

A simpler way of solving the problem would be to give each potential sender a predefined amount of bandwidth to be used when needed but that would waste bandwidth when not needed. A variant would be that each sender requests a certain transmission rate from a central entity every time needed but that solution doesn't scale as well as the proposal presented here. It also has to rely on a central entity which creates a bottle neck in the system as well as lowers the robustness of the system.

According to an alternative embodiment of the present invention, the senders are invited to negotiate transmission rate. This negotiation is made by utilising rules in a specialised protocol and the senders are intended to agree on which send rate to use. Even though the protocol must be developed in order to realise this embodiment, additional functions and possibilities can be built in the system. The protocol housed by the distributing unit is provided with extra information about the nature of transmission whereby the adaptation does not entirely rely on the real payload data but also on additional information. In some situations, this is an advantageous approach.

## Claims

1. Apparatus for monitoring and adjusting bandwidth utilisation between a group of different participating users accessing client terminals (40-46) in a common media event in a computer network (5), the apparatus comprising:
a distributing unit (10) adapted to distribute address information and bandwidth limitation to the participating users connectable via the computer network to the common media event from their respective client terminals, the distributing unit being hosted from a central administration entity (30),
connecting links (70-76) adapted to connect each client terminals of participating users via the Internet or any other global interconnecting network to the distributing unit,
**characterised in that** said bandwidth limitation is a limitation in total bandwidth for an interactive media event within a group of participants, and **in that** measurement means (20-26) are arranged at the client terminals adapted to measure incoming data streams to the client terminals from other users,
wherein the client terminals are adapted to autonomously adjust their amount of transmission to a level that allows for optimal utilisation of available resources during transmission based on a comparison of the distributed bandwidth limitation and the measured incoming data streams.

2. Apparatus for monitoring and adjusting bandwidth utilisation according to claim 1, wherein the client terminals are arranged to negotiate the transmission rate and agree on which send rate to use.

3. Apparatus for monitoring and adjusting bandwidth utilisation according to any of claims 1-2, **characterised in that**
the distributing unit is adapted to limit the total use of bandwidth during a media event to a predetermined value, the predetermined value being adaptable and independent of the number of participating users.

4. Apparatus for monitoring and adjusting bandwidth utilisation according to any of claims 1-3, **characterised in that**
the measurement means of each participating client terminal is adapted to monitor the total incoming data stream, and as a result of a total transmission exceeding the distributed transmission limitation, each client terminal decreases its transmission rate by the exceeded transmission divided by the number of participants.

5. Apparatus for monitoring and adjusting bandwidth utilisation according to claim 1-4, **characterised in that**
the regulation of transmission rate to and from client terminals is adapted by applying a low-pass filter to the transmission rate subjected to adaptation.

6. Apparatus for monitoring and adjusting bandwidth utilisation according to claim 1-5, **characterised in that**
the media event includes transmission of real time video to at least one participating client terminal.

7. Apparatus for monitoring and adjusting bandwidth utilisation according to claim 1-6, **characterised in that**
the media event includes transmission of at least one digital note pad to a plurality of client terminals for mutual interaction between participating users.

8. Apparatus for monitoring and adjusting bandwidth utilisation according to anyone of preceding claims, **characterised in that**
each client terminal is provided with image capturing means (50-56), by which an image of the participating user is captured, the image adapted to be broadcast in real time to other participating users.

9. Apparatus for monitoring and adjusting bandwidth utilisation according to anyone of preceding claims, **characterised in that**
each client terminal is provided with audio capturing means (60-66), by which audio signals of the participating user is captured, the audio signals being digitised and adapted to be broadcast in real time to other participating users.

10. Apparatus for monitoring and adjusting bandwidth utilisation according to claim 8 or 9, **characterised in that**
the media event includes transmission of a real time images and audio signals of participating users to a plurality of client terminals for mutual interaction between participating users.

11. Apparatus for monitoring and adjusting bandwidth utilisation according to anyone of preceding claims, **characterised in that**
the media event includes transmission of a combination of features including real time video, digital note pad, images and audio signals, the transmission directed to client terminals of participating users.

12. Apparatus for monitoring and adjusting bandwidth utilisation according to claim 1, **characterised in that**
connecting links being wireless transmission means, such as infrared, Bluetooth or wireless-LAN.

13. Method for monitoring and adjusting bandwidth utilisation in a group of users accessing client terminals (40-46) in a common media event in a computer network (5), comprising the step of:
distributing to at least one connectable user address information and a bandwidth limitation by means of a distributing unit (10);
**characterised in that** said bandwidth limitation is a limitation in total bandwidth for an interactive media event within a group of participants, and that the method further comprises at the client terminals the steps of;
measuring incoming data streams
comparing the incoming data stream with the distributed bandwidth limitation,
in response to an exceeded bandwidth limitation, regulating the transmission rates of the participating client terminal in order to allow for real-time changes of the group structure during the media event.

14. Computer program product for monitoring and adjusting bandwidth utilisation in group communication, the computer program product being integrated and transmissible between the distributing means (10) and client terminals (40-46) of the apparatus of claims 1-12, the computer program product being adapted for carrying out the method steps of claim 13.

## Patentansprüche

1. Vorrichtung zur Überwachung und Einstellung der Bandbreitennutzung zwischen einer Gruppe verschiedener teilnehmender Nutzer, die auf Client-Endgeräte (40 - 46) zugreifen, in einem gemeinsamen Medienereignis in einem Computernetzwerk (5), wobei die Vorrichtung aufweist:
eine Verteilungseinheit (10), die geeignet ist, Adressinformationen und Bandbreitenbegrenzungen an die teilnehmenden Nutzer zu verteilen, die von ihren jeweiligen Client-Endgeräten über das Computernetzwerk mit dem gemeinsamen Medienereignis verbindbar sind, wobei die Verteilungseinheit von einer zentralen Verwaltungseinheit (30) beherbergt wird,
Verbinden von Verbindungen (70 - 76), die geeignet sind, jedes Client-Endgerät von teilnehmenden Nutzern über das Internet oder jedes andere globale Verbindungsnetzwerk mit der Verteilungseinheit zu verbinden,
**dadurch gekennzeichnet, dass** die Bandbreitenbegrenzung eine Begrenzung der Gesamtbandbreite für ein interaktives Medienereignis innerhalb einer Gruppe von Teilnehmern ist und dass Messeinrichtungen (20 - 26) an den Client-Endgeräten eingerichtet sind, die geeignet sind, von anderen Nutzern ankommende Datenströme an den Client-Endgeräten zu messen,
wobei die Client-Endgeräte geeignet sind, ihre Übertragungsmenge basierend auf einem Vergleich der verteilten Bandbreitebegrenzung und der gemessenen ankommenden Datenströme autonom auf einen Pegel einzustellen, der die optimale Nutzung verfügbarer Ressourcen während der Übertragung zulässt.

2. Vorrichtung zur Überwachung und Einstellung der Bandbreitennutzung nach Anspruch 1, wobei die Client-Endgeräte eingerichtet sind, um die Übertragungsrate auszuhandeln und sich darauf zu einigen, welche Senderate verwendet werden soll.

3. Vorrichtung zur Überwachung und Einstellung der Bandbreitennutzung nach einem der Ansprüche 1 bis 2, **dadurch gekennzeichnet, dass**:
die Verteilungseinheit geeignet ist, die gesamte Bandbreitennutzung während eines Medienereignisses auf einen vorbestimmten Wert zu begrenzen, wobei der vorbestimmte Wert anpassbar ist und unabhängig von der Anzahl teilnehmender Nutzer ist.

4. Vorrichtung zur Überwachung und Einstellung der Bandbreitennutzung nach einem der Ansprüche 1 - 3, **dadurch gekennzeichnet, dass**
die Messeinrichtung jedes teilnehmenden Client-Endgeräts geeignet ist, den gesamten ankommenden Datenstrom zu überwachen, und als ein Ergebnis dessen, dass eine Gesamtübertragung die verteilte Übertragungsbegrenzung überschreitet, jedes Client-Endgerät seine Übertragungsrate um die überschrittene Übertragung, geteilt durch die Anzahl von Teilnehmern, senkt.

5. Vorrichtung zur Überwachung und Einstellung der Bandbreitennutzung nach Anspruch 1 - 4, **dadurch gekennzeichnet, dass**
die Regelung der Übertragungsrate zu und von Client-Endgeräten angepasst wird, indem ein Tiefpassfilter auf die Übertragungsrate angewendet wird, die der Anpassung unterzogen wird.

6. Vorrichtung zur Überwachung und Einstellung der Bandbreitennutzung nach Anspruch 1 - 5, **dadurch gekennzeichnet, dass**
das Medienereignis die Übertragung von Echtzeitvideos an wenigstens ein teilnehmendes Client-Endgerät umfasst.

7. Vorrichtung zur Überwachung und Einstellung der Bandbreitennutzung nach Anspruch 1 - 6, **dadurch gekennzeichnet, dass**
das Medienereignis für die wechselseitige Interaktion zwischen teilnehmenden Nutzern die Übertragung wenigstens eines digitalen Notizblocks an mehrere Client-Endgeräte umfasst.

8. Vorrichtung zur Überwachung und Einstellung der Bandbreitennutzung nach einem der vorhergehenden Ansprüche, **dadurch gekennzeichnet, dass**
jedes Client-Endgerät mit Bilderfassungseinrichtungen (50 - 56) versehen ist, durch die ein Bild des teilnehmenden Nutzers erfasst wird, wobei das Bild geeignet ist, in Echtzeit an andere teilnehmende Nutzer übertragen zu werden.

9. Vorrichtung zur Überwachung und Einstellung der Bandbreitennutzung nach einem der vorhergehenden Ansprüche, **dadurch gekennzeichnet, dass**
jedes Client-Endgerät mit Audioerfassungseinrichtungen (60 - 66) versehen ist, durch die Audiosignale des teilnehmenden Nutzers erfasst werden, wobei die Audiosignale digitalisierte werden und geeignet sind, in Echtzeit an andere teilnehmende Nutzer übertragen zu werden.

10. Vorrichtung zur Überwachung und Einstellung der Bandbreitennutzung nach Anspruch 8 oder 9, **dadurch gekennzeichnet, dass**
das Medienereignis die Übertragung von Echtzeitbildern und Audiosignalen teilnehmender Nutzer an mehrere Client-Endgeräte für die wechselseitige Interaktion zwischen teilnehmenden Nutzern umfasst.

11. Vorrichtung zur Überwachung und Einstellung der Bandbreitennutzung nach einem der vorhergehenden Ansprüche, **dadurch gekennzeichnet, dass**
das Medienereignis die Übertragung einer Kombination von Merkmalen einschließlich eines Echtzeitvideos, eines digitalen Notizblocks, von Bildern und Audiosignalen, umfasst, wobei die Übertragung an Client-Endgeräte teilnehmender Nutzer gerichtet ist.

12. Vorrichtung zur Überwachung und Einstellung der Bandbreitennutzung nach Anspruch 1, **gekennzeichnet durch**:
Verbinden von Verbindungen, die drahtlose Übertragungseinrichtungen, wie etwa Infrarot, Blutetooth oder drahtloses LAN, sind.

13. Verfahren zur Überwachung und Einstellung der Bandbreitennutzung in einer Gruppe von Nutzern, die auf Client-Endgeräte (40 - 46) zugreifen, in einem gemeinsamen Medienereignis in einem Computernetzwerk (5), das den folgenden Schritt aufweist:
Verteilen von Adressinformationen und einer Bandbreitbegrenzung an wenigstens einen verbindbaren Nutzer mit Hilfe einer Verteilungseinheit (10);
**dadurch gekennzeichnet, dass** die Bandbreitenbegrenzung eine Begrenzung der Gesamtbandbreite für ein interaktives Medienereignis innerhalb einer Gruppe von Teilnehmern ist und dass das Verfahren ferner die folgenden Schritte an dem Client-Endgerät aufweist:
Messen ankommender Datenströme,
Vergleichen des ankommenden Datenstroms mit der verteilten Bandbreitenbegrenzung,
als Antwort auf eine überschrittene Bandbreitenbegrenzung, Regeln der Übertragungsraten des teilnehmenden Client-Endgeräts, um Echtzeitänderungen der Gruppenstruktur während des Medienereignisses zuzulassen.

14. Computerprogrammprodukt zur Überwachung und Einstellung der Bandbreitennutzung in einer Gruppenkommunikation, wobei das Computerprogrammprodukt integriert ist und zwischen der Verteilungseinrichtung (10) und Client-Endgeräten (40 - 46) der Vorrichtung der Ansprüche 1 - 12 übertragbar ist, wobei das Computerprogrammprodukt geeignet ist, die Verfahrensschritte von Anspruch 13 auszuführen.

## Revendications

1. Dispositif de contrôle et d'ajustement de l'utilisation de la bande passante entre un groupe de différents utilisateurs participants ayant accès à des terminaux clients (40-46) dans un événement multimédia commun au sein d'un réseau informatique (5), le dispositif comprenant :
une unité de distribution (10) apte à distribuer des informations d'adresse et une limitation de bande passante aux utilisateurs participants pouvant se connecter via le réseau informatique à événement multimédia commun à partir de leurs terminaux clients respectifs, l'unité de distribution étant hébergée par une entité d'administration centrale (30),
des liaisons de connexion (70-76) aptes à connecter chacun des terminaux clients des utilisateurs participants, via l'Internet ou tout autre réseau mondial d'interconnexion, à l'unité de distribution,
**caractérisé en ce que** ladite limitation de bande passante est une limitation en bande passante totale pour un événement multimédia interactif au sein d'un groupe de participants, et **en ce que** des moyens de mesure (20-26) sont agencés dans les terminaux clients et aptes à mesurer les flux de données entrants envoyés aux terminaux clients par les autres utilisateurs,
dans lequel les terminaux clients sont aptes à ajuster de manière autonome leur quantité de transmission à un niveau qui permet une utilisation optimale des ressources disponibles pendant la transmission, en fonction d'une comparaison entre la limitation de bande passante distribuée et les flux de données entrants mesurés.

2. Dispositif de contrôle et d'ajustement de l'utilisation de la bande passante selon la revendication 1, dans lequel les terminaux clients sont conçus pour négocier le débit de transmission et s'accorder sur le débit d'émission à utiliser.

3. Dispositif de contrôle et d'ajustement de l'utilisation de la bande passante selon l'une quelconque des revendications 1-2, **caractérisé en ce que**
l'unité de distribution est apte à limiter l'utilisation totale de la bande passante pendant un événement multimédia à une valeur prédéterminée, ladite valeur prédéterminée pouvant être adaptée et étant indépendante du nombre d'utilisateurs participants.

4. Dispositif de contrôle et d'ajustement de l'utilisation de la bande passante selon l'une quelconque des revendications 1-3, **caractérisé en ce que**
les moyens de mesure de chaque terminal client participant sont aptes à contrôler le flux de données entrant total, et si la transmission totale est supérieure à la limitation de transmission distribuée, chaque terminal client diminue son débit de transmission du dépassement de la transmission divisé par le nombre de participants.

5. Dispositif de contrôle et d'ajustement de l'utilisation de la bande passante selon les revendications 1-4, **caractérisé en ce que**
la régulation du débit de transmission au départ et à destination des terminaux clients est adaptée par application d'un filtre passe-bas au débit de transmission objet de l'adaptation.

6. Dispositif de contrôle et d'ajustement de l'utilisation de la bande passante selon les revendications 1-5, **caractérisé en ce que**
l'événement multimédia comprend la transmission d'une vidéo en temps réel à au moins un terminal client participant.

7. Dispositif de contrôle et d'ajustement de l'utilisation de la bande passante selon les revendications 1-6, **caractérisé en ce que**
l'événement multimédia comprend la transmission d'au moins un bloc-notes numérique à une pluralité de terminaux clients pour une interaction mutuelle entre les utilisateurs participants.

8. Dispositif de contrôle et d'ajustement de l'utilisation de la bande passante selon l'une quelconque des revendications précédentes, **caractérisé en ce que**
chaque terminal client est pourvu de moyens de capture d'image (50-56) par lesquels une image de l'utilisateur participant est capturée, l'image étant apte à être diffusée en temps réel aux autres utilisateurs participants.

9. Dispositif de contrôle et d'ajustement de l'utilisation de la bande passante selon l'une quelconque des revendications précédentes, **caractérisé en ce que**
chaque terminal client est pourvu de moyens de capture audio (60-66) par lesquels des signaux audio de l'utilisateur participant sont capturés, lesdits signaux audio étant numérisés et aptes à être diffusés en temps réel aux autres utilisateurs participants.

10. Dispositif de contrôle et d'ajustement de l'utilisation de la bande passante selon la revendication 8 ou 9, **caractérisé en ce que**
l'événement multimédia comprend la transmission d'images en temps réel et de signaux audio des utilisateurs participants à une pluralité de terminaux clients pour une interaction mutuelle entre les utilisateurs participants.

11. Dispositif de contrôle et d'ajustement de l'utilisation de la bande passante selon l'une quelconque des revendications précédentes, **caractérisé en ce que**
l'événement multimédia comprend la transmission d'une combinaison d'éléments comprenant une vidéo en temps réel, un bloc-notes numérique, des images et des signaux audio, la transmission étant destinée aux terminaux clients des utilisateurs participants.

12. Dispositif de contrôle et d'ajustement de l'utilisation de la bande passante selon la revendication 1, **caractérisé en ce que**
les liaisons de connexion sont des moyens de transmission sans fil tels que l'infrarouge, le Bluetooth ou un réseau local sans fil.

13. Procédé de contrôle et d'ajustement de l'utilisation de la bande passante dans un groupe d'utilisateurs ayant accès à des terminaux clients (40-46) dans un événement multimédia commun au sein d'un réseau informatique (5), comprenant les étapes consistant à :
distribuer à au moins un utilisateur pouvant se connecter des informations d'adresse et une limitation de bande passante au moyen d'une unité de distribution (10) ;
**caractérisé en ce que** ladite limitation de bande passante est une limitation en bande passante totale pour un événement multimédia interactif au sein d'un groupe de participants, et **en ce que** le procédé comprend en outre, au niveau des terminaux clients, les étapes consistant à :
mesurer les flux de données entrants,
comparer le flux de données entrant avec la limitation de bande passante distribuée,
en réponse à un dépassement de la limitation de bande passante, à réguler les débits de transmission du terminal client participant afin de permettre des modifications en temps réel de la structure du groupe pendant événement multimédia.

14. Produit-programme informatique de contrôle et d'ajustement de l'utilisation de la bande passante dans une communication de groupe, le produit-programme informatique étant intégré et pouvant être transmis entre les moyens de distribution (10) et les terminaux clients (40-46) du dispositif selon les revendications 1-12, le produit-programme informatique étant apte à exécuter les étapes de procédé de la revendication 13.
